# EUROPÄISCHE PATENTSCHRIFT

(11) **EP 1 968 891 B1**
(45) Veröffentlichungstag und Bekanntmachung des Hinweises auf die Patenterteilung: **23.02.2011**
(21) Anmeldenummer: 06829301.8
(22) Anmeldetag: 05.12.2006
(51) Int. Cl.: C01B 33/193, C01B 33/26, D06M 11/79, D06M 11/45

(54) **NANOSKALIGE TEILCHEN AUF DER BASIS VON SIO2 UND MISCHOXIDEN HIERVON, DEREN HERSTELLUNG UND VERWENDUNG ZUR BEHANDLUNG TEXTILER MATERIALIEN**
NANOSCALAR PARTICLES BASED ON SIO2 AND MIXED OXIDES THEREOF, THEIR PREPARATION AND USE FOR TREATING TEXTILE MATERIALS
PARTICULES À L'ÉCHELLE NANOMÉTRIQUE À BASE DE SIO2 ET OXYDES MIXTES CORRESPONDANTS, LEUR PRODUCTION ET LEUR UTILISATION POUR LE TRAITEMENT DE MATERIAUX TEXTILES

(30) Priorität: 23.12.2005 DE 102005062606
(43) Veröffentlichungstag der Anmeldung: 17.09.2008
(73) Patentinhaber: Deutsche Institute für Textil- und Faserforschung Denkendorf, 73770 Denkendorf (DE)
(72) Erfinder: EFFENBERGER, Franz, 70597 Stuttgart (DE); RENTSENLKHUNDEV, Myadagmaa, D - 93309 Kelheim (DE)
(74) Vertreter: Hagemann, Heinrich
(86) Internationale Anmeldenummer: PCT/EP2006/011657
(87) Internationale Veröffentlichungsnummer: WO 2007/079841

(56) Entgegenhaltungen:
- WO-A-2004/038089
- DE-A1- 10 238 463
- SADASIVAN, SRIDHAR ET AL: "Preparation and characterization of ultrafine silica" COLLOIDS AND SURFACES, A: PHYSICOCHEMICAL AND ENGINEERING ASPECTS , 132(1), 45-52 CODEN: CPEAEH; ISSN: 0927-7757, 1998, XP002424466
- JESIONOWSKI T ET AL: "SURFACE PROPERTIES AND DISPERSION BEHAVIOUR OF PRECIPITATED SILICAS" JOURNAL OF MATERIALS SCIENCE, SPRINGER / BUSINESS MEDIA, DORDRECHT, NL, Bd. 37, Nr. 8, 15. April 2002 (2002-04-15), Seiten 1621-1633, XP001102623 ISSN: 0022-2461

## Beschreibung

Die Erfindung betrifft ein wässriges flüssiges Medium mit einem Gehalt an darin dispergierten nanoskaligen Primärteilchen auf Basis von SiO₂ oder eines Mischoxids von SiO₂ und anderen Metalloxiden, insbesondere Al₂O₃, ein Verfahren zur Herstellung dieses wässrigen flüssigen Mediums sowie dessen Verwendung zum hydrophilierenden Beschichten hydrophober textiler Materialien.

Die Modifizierung und exakte Einstellung der Oberflächeneigenschaften von Werkstoffen allgemein und insbesondere von textilen Materialien, wie textilen Fasern, ist für deren Verwendung in verschiedenen Bereichen von großer Bedeutung. So können hydrophobe textile Materialien, wie beispielsweise Fasern, für Wasser durch Hydrophilie rung benetzbar gemacht werden. Dies führt zu einer besseren Anfärbbarkeit von beispielsweise Artikeln aus Synthesefasern. Auch lässt sich hiermit ein besserer Tragekomfort erzielen. Ein weiterer Vorteil der Hydrophilierung ist die Herabsetzung der elektrostatischen Aufladung. So ist es insbesondere im Bereich der Medizinprodukte seit längerem bekannt, dass hydrophile Materialien zu einem wesentlich besseren Zellwachstum als hydrophobe Materialien führen.

Die Hydrophilierung hydrophober textiler Materialien wird im Stand der Technik beschrieben. So kann die Hydrophilierung durch Einbau hydrophiler Gruppen (wie beispielsweise bei der Polyamidfaser "Antron" von DuPont) und durch die Ausbildung einer geeigneten Garnstruktur in der Spinnerei oder geeigneter Bindungen in der Weberei erfolgen. Darüber hinaus besteht zur Veredelung die Möglichkeit, hydrophile Gruppen aufzupfropfen oder einen hydrophilen Film auf der Faser auszubilden. Darüber hinaus sind sogenannte Soil-Release-Ausrüstungen bekannt. Hier werden im Prinzip drei Klassen von Verbindungen eingesetzt, nämlich Copolymere von Acrylsäure oder Methacrylsäure, Ethoxylierungsprodukte von Polymeren, insbesondere für Synthesefasern, oder von Alkylphenolderivaten, insbesondere für Cellulosefasern, sowie modifizierte Fluorpolymere, insbesondere Poly-[N-Methylperfluoro-oktanyl-sulfonamido-ethylacrylat]. Beim Einsatz von Copolymeren von Acrylsäure oder Methacrylsäure weisen die entstehenden sauren Acrylate im Hinblick auf die Soil-Release-Wirksamkeit einen optimalen Carboxylgruppengehalt auf. Saure Acrylate führen allerdings bei gleichem Molekulargewicht und im gleichen Verhältnis der Carboxylgruppe, jedoch nach verschiedenen Verfahren hergestellt, zu unterschiedlichen Soil-Release-Eigenschaften. Im Falle der Ethoxylierungsprodukte von Polymeren oder von Alkylphenolderivaten wird im Stand der Technik für die jeweiligen Produkte ein spezieller Mechanismus für die physikalische Bindung der Polymeren an thermoplastischen Materialien vorgeschlagen. Beim Einsatz modifizierter Fluorpolymerer wird durch die Umordnung der dem jeweiligen Medium zugewandten chemischen Gruppen des Polymeren die Hydrophobie aufgehoben, so dass die nach außen wirksamen hydrophilen Gruppen Soil-Release erlauben. Zudem ist die Applikation von Soil-Release-Ausrüstungen aus Lösungen denkbar.

Im vorliegenden technischen Bereich ist auch die Anwendung eines Niederdruckplasmas (1 bis 100 Pa) von Bedeutung. Ein Niederdruckplasma lässt sich zur Funktionalisierung der Oberfläche textiler Materialien einsetzen, um beispielsweise die Faseroberfläche chemisch zu verändern und zu hydrophilieren. Anhand der Plasmabehandlung können angeregte neutrale Atome bzw. Ionen die Oberfläche in dünner Schicht gezielt verändern und damit vorteilhaften Weiterverarbeitungen zugänglich machen. Die dünne Schicht wird dadurch ausgebildet, indem sich auf der Substratoberfläche Radikale aus dem Plasma anlagern. Durch Nachdiffusion radikaler Teilchen aus dem Plasma zur Oberfläche beginnt das Schichtwachstum. Der eigentliche Mechanismus der Schichtbildung hängt stark von den Parametern ab, mit denen das Plasma betrieben wird. So lagern sich z.B. unter bestimmten Bedingungen Radikale bereits in der Gasphase zusammen und bilden größere Molekülverbände, die erst nach der Gasphasenwachstumsphase auf der Substratoberfläche deponiert werden. Unter anderen Bedingungen werden die Moleküle an der Oberfläche des Substrats adsorbiert und erst dort von den elektronen getroffen und angeregt. Sie reagieren dann in der Folge mit dem Substrat. In der Textiltechnik werden derzeit Anwendungsmöglichkeiten der Niederdruck-Plasmabehandlung im Vakuum erschlossen, um die Benetzbarkeit und die Anfärbbarkeit von Chemiefasern zu verbessern. Hierbei werden üblicherweise hydrophobe Chemiefasern hydrophiliert.

Der nachfolgend geschilderte Stand der Technik vermittelt keine relevanten Hinweise, wie eine bessere Hydrophilierung der Oberflächen hydrophober textiler Materialien erreicht werden kann: Nach der Literaturstelle "Physicochemical and Engineering Aspects 132 (1), 1998, S. 45-52 wird die Hydrolyse eines TEOS in Methanol mit einer berechneten Wassermenge durchgeführt. Anschließend wird Methanol im Vakuum abdestilliert, wobei die SiO₂-Partikel als trockener Rückstand anfallen. Damit verlieren sie die erforderliche Reaktivität für die angesprochene Hydrophilierung. In der DE 102 38 463 A1 wird nicht die chemische Herstellung von besonderen nanoskaligen SiO₂-Primärteilchen beschrieben. Vielmehr wird von vorliegenden SiO₂-Pulvern (Aerosiltypen 50, 90, 200 und 300) ausgegangen. Es wird vorgeschlagen, ein mehr oder weniger handelsübliches Siliziumdioxidpulver und mindestens eine Kationen liefernde Verbindung in einem wässrigen Medium in Kontakt zu bringen. Es läuft keine chemische Reaktion ab. Vielmehr ist die chemische Reaktion zur Bildung des SiO₂ bzw. eines Mischoxids aus SiO₂ und einem Metalloxid vorgelagert. Nach der Literaturstelle "Journal of Materials Science", Springer/Business Media, Dordrecht, NL, Bd. 37, Nr. 8, 15. April 2002, S. 1621-1633 erfolgt die Herstellung nanoskaliger Teilchen aus einem Na-Metasilikat mit Schwefelsäure und nicht, wie bei der nachfolgend geschilderten Erfindung, durch Hydrolyse von Orthosilikaten. Die Agglomeration der erhaltenen SiO₂-Nanopartikel soll nach dem Stand der Technik durch Umsetzung mit Silanen verhindert werden.

Es hat sich gezeigt, dass die oben beschriebenen Maßnahmen bzw. Mittel zur Hydrophilierung der Oberflächen hydrophober textiler Materialien nicht zufriedenstellen. Auch wurde gefunden, dass hydrophobe textile Materialien, die Alkohol und Öl abweisen sollen, nicht hinlänglich hydrophob sind. Im Ergebnis sind die derzeit bekannten Verfahren, nach denen die Oberfläche hydrophober textiler Materialien in ihren Eigenschaften, je nach Anwendungsfall, hydrophil oder hydrophob ausgebildet wird, nicht zufriedenstellend. Demzufolge lag der vorliegenden Erfindung die Aufgabe zugrunde, hier Verbesserungen vorzuschlagen.

Die obige Aufgabe wird durch ein wässriges flüssiges Medium mit einem Gehalt an darin dispergierten nanoskaligen Primärteilchen auf Basis von SiO₂ oder eines Mischoxids von SiO₂ und anderen Metalloxiden, insbesondere Al₂O₃, dadurch gelöst, dass die nanoskaligen Primärteilchen in dem wässrigen flüssigen Medium hergestellt worden sind, eine mittlere Teilchengröße von 1 bis 2000 nm (bestimmt nach der Methode der Messung der Teilchengrößen mit dem Gerät Zetasizer NS (Nano Serie)) sowie eine negative Ladung, gemessen als Zetapotential (bestimmt nach der Messmethode in Abhängigkeit vom pH-Wert mit dem Gerät Zetasizer) aufweisen und für hydrophobe textile Materialien hydrophilierend sind.

Gegenstand der Erfindung ist des Weiteren ein Verfahren zur Herstellung dieses wässrigen flüssigen Mediums, das dadurch gekennzeichnet ist, dass eine wässrige Dispersion eines Orthosilikats in Gegenwart eines Dispergiermittels mit einem Hochleistungsrührgerät gerührt und das Orthosilikat zu nanoskaligen Primärteilchen hydrolysiert wird oder der Dispersion des Orthosilikats ein Metallsalz zur Ausbildung eines Mischoxids von SiO₂ und anderen Metalloxiden zugemischt und die erhaltene Dispersion mit einem Hochleistungsrührgerät gerührt und das darin enthaltene Orthosilikat zu nanoskaligen Primärteilchen hydrolysiert wird.

Der besondere Wert der vorliegenden Erfindung liegt darin, dass, wie nachfolgend noch gezeigt, sich das wässrige flüssige Medium gemäß der Erfindung zum vorteilhaften hydrophilierenden Beschichten hydrophober textiler Materialien eignet.

Die erfindungsgemäßen nanoskaligen Primärteilchen zeichnen sich durch die mittlere Teilchengröße von etwa 1 bis 2000 nm aus, wobei dieser mittlere Teilchengrößenbereich mit den üblichen Methoden bestimmt werden kann. Im Falle der Erfindung soll die mittlere Teilchengröße in Dispersion nach der Methode der Messung der Teilchengrößen mit dem Gerät Zetasizer NS (Nano Serie) bestimmt werden. Hierzu sei auf die Literaturstelle "The ultimate in desktop particle characterization", Verlag Malvern Instruments, Erscheinungsjahr 2003, und "Parade Size Measurement"; T. Allen 4th Edition 1992, ISBN 04123570 and 5th Edition, 1997, ISBN 0412729504 verwiesen. Es können zur Teilchengrößenbestimmung auch andere vergleichbare Messmethoden herangezogen werden, beispielsweise "Dynamic Light Scattering (DLS)" (Dr. Michael Kaszuba & Dr. Kevin Mattison "High concentration particle size measurements using dynamic light scattering" Lab Plus international - September 2004, und Dahneke BE. "Measurement of Suspended Particles by Quasielastic Ught Scattering", 1983, Wiley). Von besonderem Vorteil ist für die später noch detailliert dargestellte Behandlung hydrophober textiler Materialien eine mittlere Teilchengröße der nanoskaligen Primärteilchen von etwa 40 bis 500 nm, insbesondere von etwa 100 bis 150 nm. Dies gilt als Regel und soll keineswegs einschränkend sein, da die Teilchengröße bei der Verwendung der erfindungsgemäßen nanoskallgen Primärteilchen stets im Hinblick auf die besondere Art der zu behandelnden textilen Materialien bzw. der dabei angestrebten Effekte abgestimmt wird.

Nach dem später noch beschriebenen Verfahren zur Herstellung der erfindungsgemäßen nanoskaligen Primärteilchen fallen diese, wenn sie isoliert werden, in Form eines Pulvers an. Sie werden dabei in üblicher Weise aus dem Reaktionsmedium gewonnen, beispielsweise durch Gefriertrocknen. Hierbei kann auch Agglomeratbildung auftreten. Bei der späteren Verwendung ist dies im Allgemeinen nicht erwünscht. Sollte es im Einzelfall zweckmäßig sein, eine Agglomeratbildung auszuschließen bzw. das Reaktionsmittel unmittelbar einzusetzen, dann steht dieses dem Fachmann frei. Von besonderem Vorteil ist es, wenn für die nachfolgend weiter angesprochenen Verwendungszwecke die nanoskaligen Teilchen erfindungsgemäß in dem Reaktionsmedium verbleiben und quasi in situ der gewünschten Anbindung zugeführt werden. Über die jeweiligen Reaktionsmedien finden sich nachfolgend noch Ausführungen, auf die verwiesen sei.

Ein weiteres wesentliches Kennzeichen der erfindungsgemäßen nanoskaligen Primärteilchen ist deren negative Ladung. Diese wird ausgedrückt als Zetapotential, bestimmt nach der Messmethode der Abhängigkeit vom pH-Wert mit dem Gerät Zetasizer ZS. Dieses ist dem Fachmann bekannt. Diesbezüglich sei auf die allgemeine Literatur "Zetapotential und Partikelladung in der Laborpraxis" von Rainer H. Müller, 1996 und "Electrophoresis of particles in suspension, in Surface and Colloid Science", James, A.M., Plenum Press, New York 1979 verwiesen. Grundsätzlich lässt sich das Zetapotential aber auch noch nach anderen fachmännisch bekannten Methoden ermitteln, beispielsweise M3 (Mixed Mode Measurement) Technique, beschrieben in der Literaturstelle M. Minor., A. J. van der Linde "Dynamic aspects of Electrophoresis and Electro-osmosis: A new fast method for measuring particle mobilities", Journal of Colloid and Interface Science, 189 (1997) und Hunter, R. J., "Zeta Potential in Colloid Science, "Academic Press", London 1981.

Vorzugsweise liegt das Zetapotential im Rahmen der Erfindung bei etwa -10 bis -200 mV, insbesondere zwischen etwa -10 bis -100 mV.. Die bevorzugte negative Ladung kann auch von der chemischen Art der erfindungsgemäßen nanoskaligen Primärteilchen abhängig sein, d.h. im Falle nanoskaliger Primärteilchen auf alleiniger Basis von SiO₂ kann diese anders liegen als im Falle eines Mischoxids von SiO₂ und anderen Metalloxiden, insbesondere Al₂O₃. Es ist bevorzugt, dass nanoskalige Primärteilchen auf der Basis von SiO₂/Al₂O₃ ein Zetapotential von etwa -8 bis -100 mV, insbesondere von etwa -10 bis -40 mV, aufweisen. Nanoskalige Primärteilchen auf der Basis von SiO₂ haben vorzugsweise eine negative Ladung von etwa -100 bis -200 mV, insbesondere von etwa -100 bis -150 mV, insbesondere etwa -100 mV. Hierbei wird vorzugsweise die negative Ladung nach der Messmethode der Abhängigkeit vom pH-Wert mit dem Gerät Zetasizer bestimmt.

Im Rahmen der Erfindung sind nanoskalige Primärteilchen auf alleiniger Basis von siO₂ besonders vorteilhaft. Dennoch hat es sich gezeigt, dass auch Mischoxide von SiO₂ mit anderen Metalloxiden, insbesondere Al₂O₃, in verschiedenen Anwendungsfällen von besonderem Vorteil sein können. Als vorteilhafte Regel kann im Rahmen der Erfindung bei nanoskaligen Primärteilchen auf Basis von SiO₂ und anderen Metalloxiden angegeben werden, dass auf ein Gewichtsteil SiO₂ etwa 0,125 bis 0,625 Gewichtsteile, insbesondere etwa 0,125 bis 0,25 Gewichtsteile des weiteren Metalloxids entfallen. Im Falle des Mischoxids aus SiO₂ und Al₂O₃ hat es sich dabei als besonders vorteilhaft erwiesen, wenn dieses ein -Si-O-Al-Netzwerk sowie ein Festkörper-NMR-Spektrum mit Q-Gruppen [Q⁴(2Al)] und [Q⁴(1Al)] aufweist.

Gegenstand der Erfindung ist darüber hinaus ein vorteilhaftes Verfahren zur Herstellung des erfindungsgemäß wässrigen flüssigen mediums. Bei der Herstellung der darin dispergierten nanoskaligen Primärteilchen die im Wesentlichen auf Siliziumdioxid beruhen, wird vorzugsweise die Dispersion eines Orthosilikats, insbesondere in Form von Tetramethylorthosilikat (TMOS), in Gegenwart eines Dispergiermittels, insbesondere nichtionischen Dispergiermittels, mit einem Hochleistungsrührgerät gerührt und das Orthosilikat zu nanoskaligen Primärteilchen hydrolysiert. Dieses Verfahren wird dann modifiziert, wenn ein Mischoxid von SiO₂ mit anderen Metalloxiden in nanoskalige Primärteilchen überführt werden soll. Hierbei geht man vorzugsweise so vor, dass insbesondere der wässrigen Dispersion bzw. Lösung des Orthosilikats die insbesondere wässrige Lösung bzw. Dispersion eines Metallsalzes zur Bildung eines Mischoxids von SiO₂ und anderen Metalloxiden zugemischt und diese wässrige Mischung dann mit dem Hochleistungsrührgerät gerührt und das darin enthaltene Orthosilikat zu nanoskaligen Primärteilchen hydrolysiert wird. Die nicht-ionischen Dispergiermittel sind bevorzugt. Als besondere Beispiele können Alkoholethoxylate in Form des Handelsproduktes Tis-socyl RLB angegeben werden, wobei insbesondere die Homogenität der Dispersion bzw. der Lösung des Orthosilikats begünstigt werden soll. Bei der Einstellung der Menge der Dispergiermittel wird fachmännisch vorgegangen. Im Allgemeinen liegt die Menge der Dispergiermittel in einem Bereich von etwa 0,2 g/l bis 2 g/l, insbesondere von etwa 0,4 g/l bis 0,8 g/l.

Das erfindungsgemäße Verfahren lässt sich bei Raumtemperatur bzw. etwa 20°C, jedoch auch bei erhöhter Temperatur, beispielsweise bis etwa 40°C, durchführen. Es müssen in dem Reaktionsmedium, in dem die nanoskaligen Primärteilchen anfallen, geeignete Hydrolysebedingungen eingestellt werden. Dies kann beispielsweise durch die Einbeziehung eines geeigneten Katalysators erfolgen. Hierbei kann es sich um verdünnte Säuren, insbesondere verdünnte Salzsäure, handeln. Der bevorzugte Konzentrationsbereich der verdünnten Salzsäure in der der Hydrolyse zu unterwerfenden Dispersion liegt zwischen etwa 0,5 bis 0,001 N, insbesondere zwischen etwa 0,008 und 0,015 N.

Die oben dargestellte abstrakte Verfahrenslehre lässt sich vielfältig ausgestalten: So hat es sich als besonders vorteilhaft erwiesen, wenn ein Hochleistungsrührgerät mit hohen Scherleistungen herangezogen wird, beispielsweise ein Ultra-Turrax®-Gerät (vertrieben von der Firma Janke & Kunkel GmbH). Die besonderen Vorteile eines derartigen Hochleistungsrührgeräts liegen darin, dass man das Reaktionsmedium vollständig homogenisieren kann. Es hat sich überraschenderweise gezeigt, dass die Teilchengröße der nanöskaligen Primärteilchen dadurch vielfältig gesteuert werden kann, indem die Einzelparameter der erfindungsgemäßen abstrakten Verfahrenslehre modifiziert werden. Das erfindungsgemäße Verfahren bietet also den besonderen Vorteil, dass es sich leicht im Hinblick auf die angestrebte und im Einzelfall wünschenswerte mittlere Teilchengröße der nanoskaligen Primärteilchen steuern lässt. So kann die mittlere Teilchengröße durch eine Variation der Konzentration des Orthosilikats, insbesondere des Tetramethylorthosilikats, der Konzentration der zur Ausbildung von Mischoxiden herangezogenen Metallsalze, der Konzentration des der Lösungsmittel des Reaktionsmittels sowie durch die Wahl des Lösungsmittels_wünschenswert gesteuert werden, wobei jedoch stets Wasser zugegen sein muss, um die Hydrolyse einzuleiten. Dabei kann das wässrige Medium zur weitergehenden Steuerung, wie nachfolgend noch im Einzelnen dargestellt, verschiedene andere organische Lösungsmittel, insbesondere Alkohole, wie insbesondere Methanol und/oder Ethanol, enthalten.

Eine besonders vorteilhafte Steuerung liegt demzufolge in der Wahl des jeweiligen Lösungsmittels bzw. Dispersionsmittels, die demzufolge die flüssige Phase des Reaktionsmediums bilden. Wird beispielsweise hier allein Wasser eingesetzt, dann lässt sich damit im erfindungsgemäßen Rahmen einer Teilchengröße von 1 bis 2000 nm eine angehobene mittlere Teilchengröße von z.B. 40 bis 500 nm einstellen. Würde nicht erfindungsgemäß Alkohol, insbesondere in Form von Methanol und/oder Ethanol, als Dispersionsmittel eingesetzt, dann lässt sich die mittlere Teilchengröße stark absenken, so beispielsweise in den Bereich von etwa 1 bis 500 nm, insbesondere etwa 1 bis 10 nm. Mittlere Werte lassen sich insbesondere durch eingestelltes Mischen der angesprochenen Alkohole mit Wasser erreichen. Eine besonders vorteilhafte Möglichkeit der Steuerung besteht darin, die Konzentration des Orthosilikats, insbesondere Tetramethylorthosilikats, in der der Hydrolyse zu unterwerfenden Dispersion zu variieren. Besonders vorteilhaft ist der Konzentrationsbereich von etwa 0,5 bis 5 Gew.-%, insbesondere von etwa 0,5 bis 2 Gew.-%, um die wünschenswert niedrige mittlere Teilchengröße von 40 bis 500 nm, insbesondere von 100 bis 150 nm einzustellen.

Zur Steuerung der mittleren Teilchengröße der nanoskaligen Primärteilchen wird vorzugsweise eine Variation der Konzentration des TMOS, der Konzentration der Metallsalze, der Konzentration des Dispergiermittels sowie des Dispergiermittels in Form von Wasser vorgenommen. Bei der Herstellung des SiO₂/Al₂O₃-Mischoxids ist es bevorzugt, eine Dispersion eines Orthosilikats mit der Dispersion eines Aluminiumsalzes mit einem Hochleistungsrührgerät zu vermischen, wobei vorzugsweise Aluminiumsulfat eingesetzt wird.

Eine weitere Steuerungsmöglichkeit im Zusammenhang mit nanoskaligen Primärteilchen auf der Basis von SiO₂/Al₂O₃ besteht darin, die Konzentration des Aluminiumsalzes in der der Hydrolyse zu unterwerfenden Dispersion gezielt einzustellen. Von besonderem Vorteil ist es hierbei, dass die der Hydrolyse zu unterwerfende Reaktionsmedium das Aluminiumsalz, insbesondere das Aluminiumsulfat, in einer Menge von 10 bis 30 Mol%, insbesondere 15 bis 25 Mol%, bezogen auf die Menge des Orthosilikats enthält. Grundsätzlich kann die jeweilige Ausgangsdispersion des Aluminiumsalzes ebenfalls bereits im Hinblick auf diese Anforderung eingestellt werden.

Wenn vorstehend von Hydrolyse gesprochen wurde, dann muss, wie es die praktische Anwendung der Erfindung zeigt, diese nicht vollständig abgelaufen sein. Ein Einzelfällen reicht es aus, um die wünschenswerten Effekte zu erzielen, dass sie partiell abläuft, um beispielsweise nanoskalige Teilchen auf der Basis von SiO₂ oder SiO₂/Al₂O₃ in einer Teilchengröße von etwa 80 bis 120, insbesondere etwa 95 bis 105 nm darzustellen, die für die Verwendung in der Textilausrüstung von Vorteil sind.

Mit der erfindungsgemäßen Verfahrenslehre lassen sich also in dem angesprochenen Bereich von 1 bis 2000 nm jegliche gewünschten Teilchengrößen herstellen. Die verschiedenen Größen, die hier zur Steuerung variiert werden können, wurden vorstehend bereits angesprochen. Hierbei ist insbesondere die besondere Auswahl des Lösungsmittels und die Einstellung des besonderen pH-Wertes von Bedeutung. Der pH-Wert sollte im Allgemeinen zwischen etwa 3 bis 5, insbesondere zwischen etwa 4,5 bis 5, liegen.

Der besondere Wert der erfindunoegemäßen nanoskaligen Primärteilchen besteht darin, dass hiermit hydrophobe textile Materialien in besonders einfacher Weise hydrophilierend beschichtet werden können. Dieses Beschichten ist in einfacher Form durchführbar. Die Konzentration an TMOS in der Auftragsdispersion ist nicht kritisch. Vorteilhafterweise sollte sie zwischen etwa 0,5 bis etwa 5 Gew.-%, insbesondere zwischen etwa 0,5 und 2 Gew.-%, liegen. Dies ist unabhängig von der nicht kritischen Konzentration der Auftragsdispersion. An nanoskaligen Primärteilchen wird diese auf das zu behandelnde textile Material eingebracht bzw. das textile Material damit imprägniert. Es schließt sich ein Abquetschen an, was mit eine Foulard geschehen kann. Beispielsweise kann hierbei ein Abquetschen bei 0,15 kp/cm² Druck und mit einer Geschwindigkeit von etwa 1 m/min erfolgt. Es schließt sich ein Trocknen an, was beispielsweise im üblichen Trockenschrank 20 min lang bei 80°C erfolgen kann.

Die im Rahmen der erfindungsgemäßen Verwendungslehre heranzuziehenden textilen Materialien sind vielfältig. Es kann sich dabei um Filamente, Fasern, Garne, Gewebe, Gewirke und/oder Vliese handeln, die mit einer hydrophilen Beschichtung versehen werden. Die textilen Materialien können beispielsweise aus polymeren Materialien oder Glasmaterialien bestehen. Sollten sie in Form von organischen Polymeren vorliegen, dann handelt es sich vorzugsweise um Polyester, Polyolefine, insbesondere Homo- oder Copolymerisate von Ethylen und/oder Propylen, halogenierte Polyolefine, insbesondere PCV, Polyacrylsäurederivate (PAN) und Polyamide. Durch die erfindungsgemäße Behandlung erhalten diese textilen Materialien eine ausgeprägt starke Hydrophilie. Die lässt sich durch verschiedene Messmethoden bestätigen, so anhand der Messmethode des Kontaktwinkels eines Wassertropfens und des Liquid Strike Through Time Tests. So zeigt sich der besondere Vorteil an einem hydrophilierten Vlies aus Polypropylen, bei dem der Kontaktwinkel im Vergleich zu dem nicht hydrophilierten Vlies von 120° auf 60° reduziert wird. Bei einem Polypropylen-Gewebe erfolgte eine Reduzierung von 117° auf 48°. Der besondere Grad der Hydrophilie erweist sich an einem Polypropylen-Vlies, bei dem gemessen werden kann, dass bei einem Liquid Strike Through Time Test das hydrophilierte Polypropylen-Vlies nach weniger als 3 Sekunden durch die Testflüssigkeit benetzt wird.

Die Ausbildung einer hydrophilen Beschichtung ist ohne Weiteres nach rein fachmännischem Vorgehen möglich. Dabei wird, wie vorstehend bereits angesprochen, vorzugsweise das Reaktionsmedium unmittelbar nach Herstellung der nanoskaligen Teilchen herangezogen, gleichsam im Status in situ. Überraschend ist es dabei, dass die hydrophilierende Beschichtung äußerst dünn ausgebildet sein kann, beispielsweise in der Stärke des Partikeldurchmessers. Die Hydrophilierung ist dann völlig ausreichend. Das hydrophilierte Material lässt sich gut anpassen. Beispielsweise ist in dem Falle der Verwendung von Babywindeln noch ein Superabsorber, quasi in einem Paket, in ein derartiges hydrophiliertes Material eingebunden. Die nun vorgenommene Beschichtung hat bei beispielsweise Polypropylen den Vorteil, dass sie sich an der Haut gut anfühlt, dass sie Feuchtigkeit aufnimmt und diese durch das Propylen nach außen wieder gut abgibt. Zwar kann die hydrophile Beschichtung etwas Feuchtigkeit aufnehmen. Sie gibt sie jedoch sofort wieder ab. Somit befindet sich innerhalb der Windel der sogenannte "Superabsorber". Entsprechendes gilt für Slipeinlagen und dergleichen. Von besonderem Vorteil ist auch die Verwirklichung der Erfindung bei Sportbekleidung. Auch dort wird dem Träger ein angenehmes Empfinden vermittelt, wobei die ausgeschwitzte Feuchtigkeit, wie gewünscht, nicht aufgestaut wird, sondern nach außen abgeführt wird. Durch das oben beschriebene hydrophilierende Beschichten hydrophober textiler Materialien werden demnach Produkte gewonnen, die in den Bereichen von Sport, Medizin und Hygiene von besonderem Wert sind.

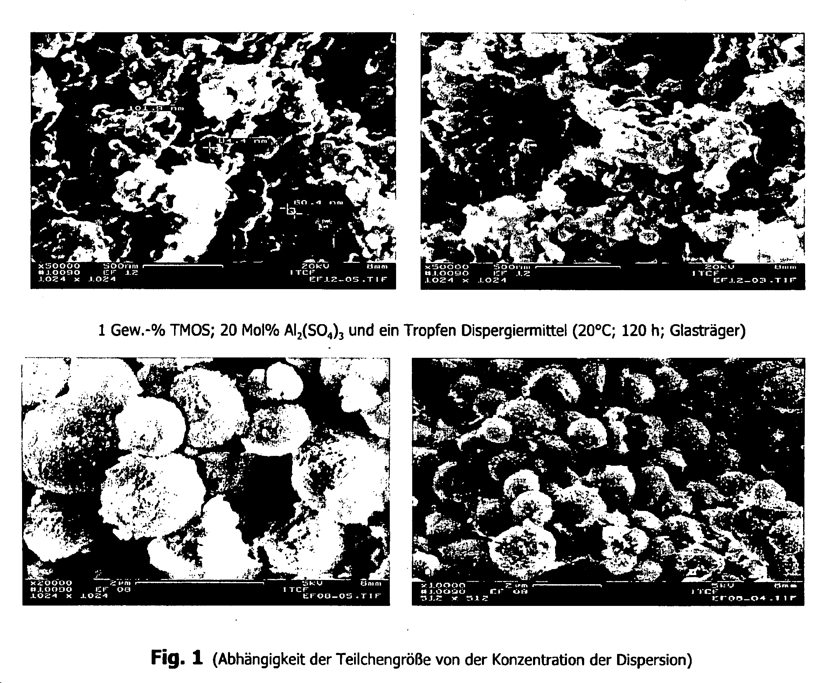

Es hat sich überraschenderweise gezeigt, dass die in vorstehender Weise mit einer hydrophilen Beschichtung versehenen hydrophoben textilen Materialien vielfältigen vorteilhaften Weiterverwendungen zugänglich sind. So gibt es textile Materialien, die eine gesteigerte Hydrophobie aufweisen müssen. Diese wird zunächst dadurch erzielt, dass auf die hydrophoben textilen Materialien z.B. fluorierte Kohlenwasserstoffe aufgebracht werden. Diese Materialien sind vergleichsweise teuer und führen nicht zu dem wünschenswert hohen Hydrophobierungsgrad. Es hat sich überraschenderweise gezeigt, dass sich dann, wenn man hydrophobe textile Materialien erfindungsgemäß hydrophiliert und auf die hydrophile Zwischenschicht die bekannte hydrophobe Beschichtung aufträgt, besonders vorteilhafte Eigenschaften einstellen. So stellen sich Verbesserungen im Hinblick auf die Alkohol- und Ölabweisung im Vergleich zu solchen textilen Materialien ein, bei denen keine hydrophile Zwischenschicht vorhanden ist. Darüber hinaus kann die Menge an teuerem hydrophobierendem Material deutlich reduziert werden, ohne dass die erzielten Effekte beeinträchtigt werden. Dies gilt insbesondere für fluorierte Verbindungen, insbesondere Fluorcarbonharze, wobei die Auftragsmenge an fluorierten Verbindungen deutlich reduziert werden kann. Der Auftrag der hydrophobierenden Schicht erfolgt fachmännisch. Hierbei wird demzufolge ein Zweischrittverfahren vorgenommen, d.h. zunächst wird die Hydrophilierung in der bezeichneten Weise vorgenommen und darauf die hydrophobe Beschichtung aufgebracht. Einzelheiten zu der Hydrophobierung textiler Materialien ergeben sich aus den nachfolgenden Beispielen. Im Ergebnis werden durch eine chemische hydrophobierende Nachbehandlung, z.B. mit Fluorcarbonharz, besonders vorteilhafte hydrophobierte textile Materialien erhalten, die die angesprochenen Effekte der Alkohol- und ÖlAbweisung, aber auch Schmutzabweisung zeigen. Diese Effekte zeigen eine Abhängigkeit von der Teilchengröße der nanoskaligen Primärteilchen, was sich aus der nachfolgenden Figur 1 ergibt.

Eine besonders vorteilhafte Verwendung der erfindungsgemäßen nanoskaligen Primärteilchen besteht darin, dass auf der oben angesprochenen hydrophilen Beschichtung der textilen Materialien eine antimikrobielle Ausrüstung vorgenommen wird. Hierbei handelt es sich insbesondere um eine antibakterizide Ausrüstung, wenngleich grundsätzlich, wenn es Sinn macht, beispielsweise auch eine antifungizide Ausrüstung in Betracht kommen kann. Es ist bevorzugt, wenn die antimikrobielle Ausrüstung-durch kationische Verbindungen, insbesondere durch quaternäre Ammoniumsalze erreicht wird, insbesondere durch das Benzalkoniumchlorid (Alkylbenzyldimethylammoniumchlorid), wobei als quaternäres Ammoniumsalz mit langer Alkylkette ein solches bevorzugt wird, das 12 bis 18 Kohlenstoff-Atomen in der Alkylkette aufweist. Von besonderer Vorteil ist der Einsatz antimikrobieller Substanzen in Form von Polyhexamethylenbiguanidiniumsalzen, Polyhexamethylenbiguanidylimid oder Chitosan, insbesondere in Form wasserlöslicher Chitosanoligomere.

Im Ergebnis ist die Erfindung mit vielfältigen Vorteilen verbunden, auf die bereits vorstehend eingegangen wurde. Darüber hinaus zeigen die efindungsgemäß hydrophilierten Materialien eine Verbesserung im Hinblick auf die Anfärbbarkeit, den Tragekomfort und die Anschmutzbarkeit. Ferner wird die elektrostatische Aufladung vorteilhaft herabgesetzt.

Die Erfindung wird nachfolgend anhand von Beispielen noch näher erläutert. Es handelt sich dabei um Beispiele zur Herstellung der erfindungsgemäßen nanoskaligen Primärteilchen sowie um Beispiele, nach denen textile Materialien hydrophiliert sowie hydrophiliert und anschließend hydrophobiert werden.

### Beispiele 1 (Herstellung von nanoskaligen Teilchen)

Zu destilliertem Wasser wird 1 Gew.-% TMOS (Tetramethylorthosilikat) gegeben. Im Hinblick auf die spätere Anwendung ist die Menge des TMOS abhängig vom Gewicht und von der Flottenaufnahme des textilen Materials, um optimale Effekte zu erzielen. In die erhaltene Dispersion wird ein Tropfen eines nicht-ionischen Dispergiermittels (chemische Bezeichnung: Fettalkoholethoxylat; Handelsprodukt Tissocyl RLB, vertrieben von der Firma Zschimmer & Schwarz) zugegeben, um eine homogene Dispersion zu erhalten und um kleine nanoskalige Primärteilchen zu erhalten. Darauf werden zu destilliertem Wasser 20 Mol% Aluminiumsulfat, bezogen auf die eingesetzte Menge an Orthosilikat, hinzugefügt. Von der zunächst erhaltenen Dispersion, die unter Einsatz von TMOS hergestellt wurde, wurden 0,125 Gewichtsteile mit 0,625 Gewichtsteilen der zweiten Dispersion gemischt. Dies erfolgte in einem Hochleistungsdispergiergerät der Handelsbezeichnung Ultra-Turrax®, vertrieben von der Firma Janke & Kunkel GmbH. Der Mischvorgang dauerte etwa 20 sec.

Die hergestellte Dispersion wurde mit einem Zetasizer N. S. gemessen, um die Teilchengrößenverteilung zu untersuchen. Die Dispersion war 24 Stunden lang stabil. Die durchschnittliche Teilchengröße des Mischoxids SiO₂/Al₂O₃ lag bei etwa 120 nm. Von der wässrigen Dispersion wurden zwei Tropfen auf einen Glasträger gegeben. Es folgte ein Trocknen bei Raumtemperatur während 120 h. Anschließend wurden REM-Untersuchungen durchgeführt. Dabei wurden im Bereich von 500 nm kugelförmige, auch teilweise agglomerierte Teilchen festgestellt. Die durchschnittliche Teilchengröße betrug 120 nm.

Anhand weiterer Versuche wurde festgestellt, dass die Teilchengröße in dem Bereich von 10 nm bis zu 2 µm gesteuert werden kann, was in Abhängigkeit von der Konzentration des TMOS, aber auch von dem jeweils gewählten Lösungsmedium ist. Wird ein Alkohol in Form von Methanol und/oder Ethanol (nicht erfindungesgemäß) eingesetzt, dann lässt sich bei gleicher Verfahrensführung wie oben eine mittlere Teilchengröße der Primärteilchen von 1 bis 10 nm einstellen, während bei einer Konzentration von TMOS von mehr als 3 Gew.-% die Teilchen im Mikrometerbereich von 1 bis 2 µm lagen. Die Dispersion wandelte sich nach 6 Stunden in ein dickflüssiges Gel um.

Es lässt sich anhand verschiedener Herstellungsmethoden zeigen, dass die Dispersion, hergestellt aus 1 Gew.-% TMOS, darauf bezogen 20 Mol% Aluminiumsulfat, und 1 bis 2 Tropfen nichtionisches Dispergiermittel, zur Bildung nanoskaliger Teilchen (etwa 100 nm) in einheitlicher Größenverteilung und mit einer Stabilität von einem Tag und mehr führt. Die wässrigen Dispersionen waren schwach sauer, insbesondere lagen sie in dem pH-Wert-Bereich von 4,5 bis 5,0. Sie wurden mit dem Gerät "Zetasizer" (vertrieben von der Firma Malvern Instruments) im Hinblick auf das ZetaPotential vermessen, um den Ladungszustand der Primärteilchen festzustellen. Dabei stellte es sich heraus, dass die nanoskaligen Primärteilchen, hergestellt aus 1 Gew.-% TMOS, darauf bezogen 20 Mol% Sulfat, und 1 bis 2 Tropfen nichtionisches Dispergiermittel, eine negative Ladung aufweisen.

Wurde eine der vorstehend bezeichneten Dispersionen bei -50°C 24 Stunden lang gefriergetrocknet, dann fiel ein weißes und feines Pulver an. Um im Falle des Mischoxids SiO₂/AlO₃ das jeweilige Bindungsverhältnis der nanoskaligen Primärteilchen zu untersuchen, wurden diese mittels Festkörper-NMR-Spektroskopie analysiert. Die Untersuchungsergebnisse zeigen, dass die Hydrolyse von TMOS und Aluminiumsulfat zu einem -Si-O-Al-Netzwerk führt, welches durch sogenannte Q-Gruppen [Q⁴ (2al) und Q⁴(1Al)] gebildet wird.

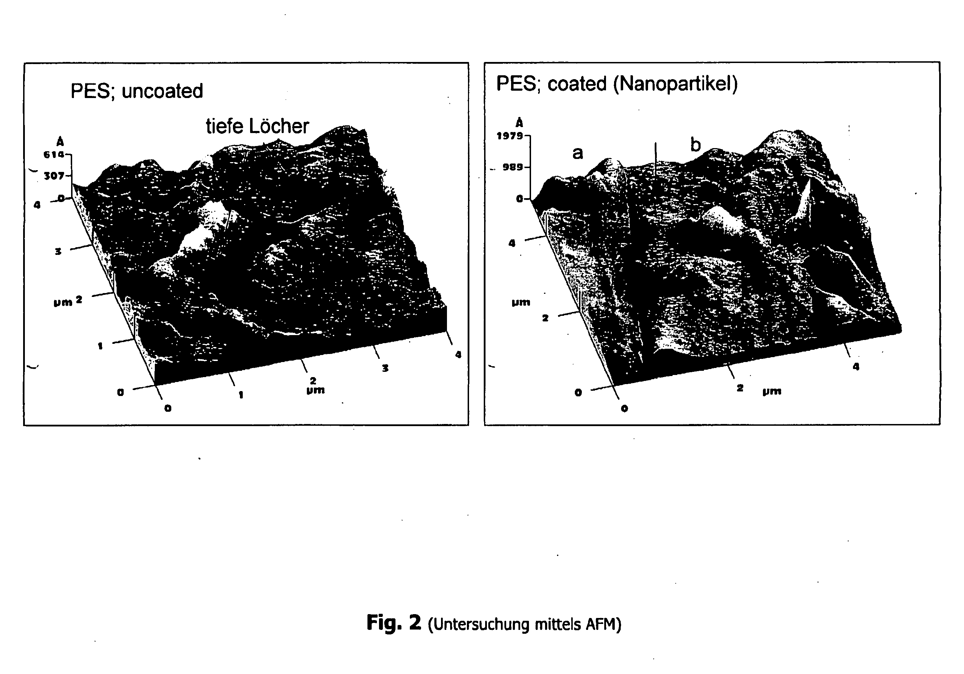

Die bisherigen Untersuchungsergebnisse zeigen, dass nanoskalige Teilchen auf der Basis von SiO₂ bzw. SiO₂/Al₂O₃ einer Teilchengröße von 100 nm bei der Beschichtung textiler Materialien besonders gut geeignet sind. Wenn die Teilchengröße unter 100 nm liegt, kann es in Einzelfällen zu keinen Abweisungseffekten kommen. Eine AFM-Aufnahme zeigt, dass die nanoskaligen Teilchen auf einer rauhen Faseroberfläche (tiefe Löcher) versinken. Dies wird in der später folgenden Figur 2 zum Ausdruck gebracht. Haben die nanoskaligen Teilchen einen Durchmesser von mehr als 500 nm, dann zeigen die Textilien einen harten Griff, der stören könnte, jedoch in Einzelfällen nicht muss.

Untersuchung der nanoskaligen Teilchen SiO₂ bzw. SiO₂/Al₂O₃ (etwa 100 nm)

### 1. Zetapotentialmessung

Eine wässrige Dispersion (schwach sauer pH = 4,5 - 5,0) einer Konzentration von 0,5 bis 2 Gew.-% TMOS und 10 bis 30 Mol-% Al₂(SO₄)₃, bezogen auf die Menge an TMOS, dazu 0,2 g/l bis 0,8 g/l nicht-ionische Dispergiermittel, wurde mit dem Gerät Zetasizer ZS der Firma "Malvern Instruments" vermessen. Das Zetapotential wurde berechnet, um den Ladungszustand der nanoskaligen Primärteilchen zu ermitteln. Das Ergebnis zeigt, dass die nanoskaligen Teilchen eine negative Ladung von -8 mV und die SiO₂-haltige Dispersion ohne Zusatz von Aluminiumsulfat eine negative Ladung von -100 mV aufweist. In der nachfolgenden Tabelle sind Literaturwerte zusammengestellt:

**Tabelle 1 (Zetapotential nach Kanamari)**

| Faserstoff | Zetapotential [mV] |
|---|---|
| CO | 54,00-30,20 |
| CO, mer. | 74,00-24,40 |
| CV | 16,60-3,20 |
| PAN | 59,9-23,46 |
| PES | 81,52-58,20 |
| PVC | 48,00-51,40 |
| Glasfaser | 41,10-35,19 |

| | |
|---|---|
| Anmerkung: Werte aus (H. F. Rouette "Lexikon für Textilveredelung", Springer-Verlag Berlin, Erscheinungsjahr 1995, S. 2670 bis 2671. | |

### 2. Festkörper-NMR-Spektroskopie

Hierbei wurde die vorstehend beschriebene Dispersion bei -55°C 24 Stunden lang gefriergetrocknet. Es wurde ein weißes, feines Pulver erhalten. Um das Bindungsverhältnis von nanoskaligen Teilchen zu untersuchen, wurden diese mittels Festkörper-NMR-Spektroskopie analysiert. Die Untersuchungsergebnisse zeigen, dass die Hydrolyse von TMOS von Aluminiumsulfat zu einem -Si-O-Al-Netzwerk führt, das durch Q-Gruppen [Q⁴(2Al)] und [Q⁴(1Al)] beschrieben werden kann.

### Beispiel 2 (Hydrophilierung von textilen Materialien)

Es wurden SiO₂ bzw. SiO₂/Al₂O₃ (Teilchengröße: 100 nm)-haltige Dispersionen auf unterschiedliche textile Materialien auf dem Foulard wie folgt beschichtet und hydrophiliert:
Es wurde zunächst eine Dispersion von SiO₂ bzw. SiO₂/Al₂O₃ in einer Konzentration von 0,5 bis 2 Gew.-% hergestellt. Das textile Material wurde bei Raumtemperatur (20°C) mit dieser Dispersion imprägniert. Es schloss sich ein Abquetschen bei 0,15 kp/cm² Druck sowie 1 m/min Geschwindigkeit auf dem Foulard an. Es erfolgte ein Trocknen bei 80°C während 20 Minuten in einem Trockenschrank.
Nach der Hydrophilierung der textilen Materialien, die nachfolgende noch geschildert werden, wurde eine Kontaktwinkelmessung und ein Liquid Strike Through Time Test durchgeführt. Die untersuchten Ergebnisse zeigen, dass die mit nanoskaligen Teilchen (SiO₂ bzw. SiO₂/Al₂O₃) beschichteten textilen Materialien sehr gute hydrophile Eigenschaften haben.

Die Kontaktwinkelmessung wurde mit dem Gerät FIBRO DAT (Dynamic Adsorption and Contact Angle Tester) durchgeführt. In der nachfolgenden Tabelle 2 sind die Ergebnisse der Kontaktwinkelmessung zusammengestellt.

**Tabelle 2 (Kontaktwinkelmessung)**

| Textilmaterial | Kontaktwinkel [°] | | |
|---|---|---|---|
| | nach 0,1 sek | nach 0,5 s | nach 10 s |
| PP Vlies (52g/m²) | | | |
| unbehandelte | 128,1 | 127,1 | 125,4 |
| Plasma behandelt (O₂, ; 80 Pa.; 60 sek) | 120,6 | 120,4 | 120,1 |
| SiO₂ -Teilchen (ca.100 nm) | 114,4 | 80,8 | -* |
| SiO₂ /Al₂O₃ -Teilchen (ca.100nm) | 106,6 | 80,1 | -* |
| PP Gewebe (128 g/m²) | | | |
| unbehandelte | 117,8 | 118,0 | 117,9 |
| Plasma behandelt (O₂, ; 80 Pa.; 60 sek) | 88,8 | 87,6 | 86,3 |
| SiO₂ -Teilchen (ca.100nm) | 106.4 | 105.8 | 50,2 |
| SiO₂ /Al₂O₃ -Teilchen (ca.100nm) | 108,0 | 107,6 | 48,8 |
| PES Gewebe (106 g/m²) | | | |
| unbehandelte | 78,7 | 62,9 | 46,8 |
| SiO₂ -Teilchen (ca.100nm) | 67,4 | 43,5 | -* |
| SiO₂ /Al₂O₃ -Teilchen (ca.100nm) | 60,6 | 53,6 | -* |

| | | | |
|---|---|---|---|
| Anmerkung: * vollständige Benetzung | | | |

Es ist darauf hinzuweisen, dass die hydrophilen Eigenschaften des beschichteten textilen Materials umso besser sind, je kleiner der Kontaktwinkel ist.

Untersuchungsergebnisse des Liquid Strike Through Time Tests: Ein Polypropylen-Vlies (20 g/m²) und ein Polypropylen-Vlies (52 g/m²) (beides handelsübliche Vliese) wurden mit nanoskaligen Teilchen (SiO₂ bzw. SiO₂/Al₂O₃) beschichtet, um die hydrophilen Eigenschaften zu testen. Dazu wurde der Liquid Strike Through Time Test entsprechend der CEL-Norm 014 (in Anlehnung an ISO 9073-8) durchgeführt. Im Hinblick auf das Merkmal "hydrophil permanent" wurde Folgendes Anforderungsprofil zugrunde gelegt: 1. Strike < 3 s: Benetzen der hydrophilierten textilen Materialien innerhalb von 3 s bedeutet sehr gute Hydrophilie; 2. Strike < 5 s: sehr gute Hydrophilie; 3.-5. Strike < 5 s. sehr gute Hydrophilie (Vorgang des 2. Strikes wird wiederholt, ohne die Filterpapiere zu wechseln).

**Tabelle 3 (Liquid Strike Through Time Test)**

| 20g/m² PP Vlies beschichtet mit SiO₂ | | | | | |
|---|---|---|---|---|---|
| 1.strike through [sek] | 2.strike through [sek] | 3.strike through [sek] | 4.strike through [sek] | 5.strike through [sek] | rewet (g) |
| - | 2,08 | 3,21 | 3,21 | 3,01 | 1,42 |
| 1,41 | 2,56 | 2,35 | 2,50 | 2,78 | 4,53 |
| 1,37 | 2,45 | 2,50 | 2,45 | 2,52 | 0,89 |
| 1,32 | 2,55 | 2,53 | 2,47 | 2,38 | 1,27 |
| 1,45 | 2,70 | 2,83 | 2,73 | 2,24 | 1,34 |
| 1,39 | 2,42 | 2,50 | 2,26 | 2,28 | 1,28 |
| 1,39 | 2,57 | 2,55 | 2,54 | 2,48 | 1,24 |
| | | | | | |

| 20g/m² PP Vlies beschichtet mit SiO₂/Al₂O₃ | | | | | |
|---|---|---|---|---|---|
| 1.strike through [sek] | 2.strike through [sek] | 3.strike through [sek] | 4.strike through [sek] | 5.strike through [sek] | rewet (g) |
| 1,61 | 2,95 | 2,87 | 2,82 | 2,87 | 0,60 |
| 1,74 | 2,82 | 3,00 | 2,72 | 3,01 | 0,55 |
| 1,64 | 2,47 | 2,83 | 4,46 | 2,52 | 1,01 |
| 1,67 | 2,62 | 2,88 | 2,62 | 2,90 | 1,19 |
| 1,59 | 2,57 | 2,66 | 2,90 | 2,71 | 1,07 |
| 2,12 | 3,33 | 3,29 | 3,11 | 2,82 | 1,73 |
| 1,73 | 2,79 | 2,92 | 2,77 | 2,81 | 1,03 |

Die Untersuchungsergebnisse anhand des Liquid Strike Through Time Tests zeigen, dass mit nanoskaligen Teilchen (SiO₂ bzw. SiO₂/Al₂O₃) beschichtete Polypropylen-Vliese (20 g/m²) ein 1. Liquid Strike Through von weniger als 3 s aufweisen.

**Tabelle 4 (liquid Strike Through Time Test)**

| 52 g/m² PP Vlies beschichtet mit SiO₂ | | | | | |
|---|---|---|---|---|---|
| 1. strike through [sek] | 2.strike through [sek] | 3.strike through [sek] | 4.strike through [sek] | 5.strike through [sek] | rewet (g) |
| 4,18 | 4,21 | 4,54 | 4,17 | 3,58 | 2,00 |
| 4,37 | 4,10 | 3,98 | 3,14 | 2,94 | 2,50 |
| 4,72 | 3,66 | 3,94 | 3,26 | 2,79 | 2,48 |
| 4,76 | 4,07 | 3,60 | 3,23 | 3,12 | 2,33 |
| 5,05 | 4,21 | 3,99 | 3,56 | 3,22 | 2,83 |
| 4,62 | 4,05 | 4,01 | 3,47 | 3,13 | 2,43 |
| | | | | | |

| 52 g/m² PP Vlies beschichtet mit SiO₂/Al₂O₃ | | | | | |
|---|---|---|---|---|---|
| 1. strike through [sek] | 2. strike through [sek] | 3. strike through [sek] | 4. strike through [sek] | 5. strike through [sek] | rewet (g) |
| 4,08 | 5,07 | 4,39 | 3,94 | 3,34 | 4,75 |
| 3,27 | 3,93 | 4,09 | 3,32 | 2,88 | 3,12 |
| 2,87 | 3,89 | 3,74 | 3,15 | 2,58 | 3,11 |
| 3,69 | 4,30 | 4,28 | 3,69 | 3,02 | 2,69 |
| 3,28 | 4,13 | 3,82 | 3,64 | 3,09 | 2,32 |
| 3,44 | 4,26 | 4,06 | 3,55 | 2,98 | 3,20 |

Obwohl das Polypropylen-Vlies (52 g/m²) dick war, benetzt sich das textile Material innerhalb von 5 s bei 2. Liquid Strike Through und 3. Like Strike Through.

Schließlich wurde ein Polypropylen-Vlies (16 g/m²) mit nanoskaligen Teilchen (SiO₂ bzw. SiO₂/Al₂O₃) beschichtet, um die hydrophilen Eigenschaften zu testen. Dazu wurde wiederum ein Liquid Strike Through Time Test nach CEL-Norm 014 (in Anlehnung an ISO 9073-8) durchgeführt. Auch hier zeigte sich eine wünschenswerte hohe Hydrophilie.

## Patentansprüche

1. Wässriges flüssiges Medium mit einem Gehalt an darin dispergierten nanoskaligen Primärteilchen auf Basis von SiO₂ oder eines Mischoxids von SiO₂ und anderen Metalloxiden, insbesondere Al₂O₃, **dadurch gekennzeichnet, dass** die nanoskaligen Primärteilchen in dem wässrigen flüssigen Medium hergestellt worden sind, eine mittlere Teilchengröße von 1 bis 2000 nm (bestimmt nach der Methode der Messung der Teilchengrößen mit dem Gerät Zetasizer NS (Nano Serie)) sowie eine negative Ladung, gemessen als Zeta potential (bestimmt nach der Messmethode in Abhängigkeit vom pH-Wert mit dem Gerät Zetasizer) aufweisen und für hydrophobe textile Materialien hydrophilierend sind.

2. Wässriges flüssiges Medium nach Anspruch 1, **dadurch gekennzeichnet, dass** das wässrige flüssige Medium das Reaktionsmedium ist, in dem die nanoskaligen Primärteilchen gebildet worden sind.

3. Flüssiges Medium nach Anspruch 1 oder 2, **dadurch gekennzeichnet, dass** die nanoskaligen Primärteilchen eine mittlere Teilchengröße von etwa 40 bis 500 nm aufweisen.

4. Flüssiges Medium nach einem der Ansprüche 1 bis 3, **dadurch gekennzeichnet, dass** es nanoskalige Primärteilchen auf Basis eines Mischoxids von SiO₂ und anderen Metalloxiden enthält und das Zetapotential etwa -8 bis -100 mV beträgt.

5. Flüssiges Medium nach einem der Ansprüche 1 bis 4, **dadurch gekennzeichnet, dass** es nanoskalige Primärteilchen auf Basis von SiO₂ enthält, die ein Zetapotential von etwa -100 bis -200 mV aufweisen.

6. Flüssiges Medium nach mindestens einem der Ansprüche 1 bis 5, **dadurch gekennzeichnet, dass** die nanoskaligen Primärteilchen in Form eines Mischoxids von SiO₂ und anderen Metalloxiden vorliegen, wobei auf 1 Gewichtsteil SiO₂ etwa 0,125 bis 0,625 Gewichtsteile, insbesondere etwa 0,125 bis 0,25 Gewichtsteile des weiteren Metalloxids entfallen.

7. Verfahren zur Herstellung eines wässrigen flüssigen Mediums mit einem Gehalt an darin dispergierten nanoskaligen Primärteilchen nach mindestens einem der vorhergehenden Ansprüche, **dadurch gekennzeichnet, dass** eine wässrige Dispersion eines Orthosilikats in Gegenwart eines Dispergiermittels mit einem Hochleistungsrührgerät gerührt und das Orthosilikat zu nanoskaligen Primärteilchen hydrolysiert wird oder der Dispersion des Orthosilikats ein Metallsalz zur Ausbildung eines Mischoxids von SiO₂ und anderen Metalloxiden zugemischt und die erhaltene Dispersion mit einem Hochleistungsrührgerät gerührt und das darin enthaltene Orthosilikat zu nanoskaligen Primärteilchen hydrolysiert wird.

8. Verfahren nach Anspruch 7, **dadurch gekennzeichnet, dass** die Konzentration des Orthosilikats in der jeweiligen Dispersion auf etwa 0,5 bis 5 Gew.-%, insbesondere auf etwa 0,5 bis 2 Gew.-% eingestellt wird.

9. Verwendung des wässrigen flüssigen Mediums mit einem Gehalt an darin dispergierten nanoskaligen Primärteilchen nach mindestens einem der Ansprüche 1 bis 6 zum hydrophilierenden Beschichten hydrophober textiler Materialien.

10. Verwendung nach Anspruch 9, **dadurch gekennzeichnet, dass** als textile Materialien Filamente, Fasern, Garne, Gewebe, Gewirke und/oder Vliese mit einer hydrophilierenden Beschichtung versehen werden.

11. Verwendung nach Anspruch 9 oder 10, **dadurch gekennzeichnet, dass** die textilen Materialien aus organischen Polymeren oder Glasmaterialien bestehen.

12. Verwendung nach einem der Ansprüche 9 bis 11 zur Einstellung stark ausgeprägter hydrophiler Eigenschaft eines textilen Materials, bestimmt nach der Messmethode des Kontaktwinkels eines Wassertropfens und des Liquid Strike Through Time Tests.

13. Verwendung nach Anspruch 12, **dadurch gekennzeichnet, dass** der Grad der Hydrophilierung, gemessen an einem Polypropylen-Vlies, dadurch zum Ausdruck kommt, dass der Kontaktwinkel eines Wassertropfens im Vergleich zu dem nicht hydrophilierten Polypropylen-Vlies von 120 auf 60° und beim Polypropylen-Gewebe von 117 auf 48° reduziert ist.

14. Verwendung nach Anspruch 13, **dadurch gekennzeichnet, dass** der Grad der Hydrophilierung, gemessen an einem Polypropylen-Vlies, dadurch zum Ausdruck kommt, dass bei einem Liquid Strike Through Time Test das hydrophilierte Polypropylen-Vlies in weniger als 3 Sekunden mit der Testflüssigkeit benetzt wird.

15. Verwendung nach mindestens einem der Ansprüche 9 bis 14, **dadurch gekennzeichnet, dass** auf der hydrophilen Beschichtung der textilen Materialien eine hydrophobe äußere Schicht mit verbesserter Alkohol- und Ölabweisung im Vergleich zu einem textilen Material ohne hydrophile Zwischenschicht ausgebildet wird.

16. Verwendung nach Anspruch 15, **dadurch gekennzeichnet, dass** zur Ausbildung der hydrophoben äußeren Schicht fluorierte Verbindungen, insbesondere Fluorcarbonharze herangezogen werden, insbesondere in einer deutlich reduzierten Auftragsmenge, verglichen mit einem textilen Material ohne hydrophile Zwischenschicht, ohne dass die angestrebte Alkohol- und Öl-Abweisung beeinträchtigt wird.

17. Verwendung nach mindestens einem der Ansprüche 9 bis 16, **dadurch gekennzeichnet, dass** auf der hydrophilen Beschichtung der textilen Materialien eine antimikrobielle Ausrüstung vorgenommen wird.

18. Verwendung nach mindestens einem der Ansprüche 9 bis 16 zur Verbesserung der Alkoholabweisbarkeit, der Ölabweisbarkeit, der Anfärbbarkeit, des Tragekomforts sowie der antistatischen Eigenschaften und Verminderung der Anschmutzbarkeit.

## Claims

1. An aqueous liquid medium with a content of nanoscale primary particles dispersed therein based on SiO₂ or a mixed oxide of SiO₂, and other metal oxides, especially Al₂O₃, **characterised in that** the nanoscale primary particles were produced in the aqueous liquid medium, have a mean particle size of 1 to 2000 nm (determined by the method of measuring the particle size with the Zetasizer NS apparatus (Nano Series)) as well as a negative charge, measured as the zeta potential (determined by the measuring method as a function of the pH with the Zetasizer apparatus) and have a hydrophilising effect on hydrophobic textile materials.

2. An aqueous liquid medium according to claim 1, **characterised in that** the aqueous liquid medium is the reaction medium, in which the nanoscale primary particles have been formed.

3. A liquid medium according to claim 1 or claim 2, **characterised in that** the nanoscale primary particles have a mean particle size of about 40 to 500 nm.

4. A liquid medium according to any one of claims 1 to 3, **characterised in that** it contains nanoscale primary particles based on a mixed oxide of SiO₂ and other metal oxides and the zeta potential is about -8 to -100 mV.

5. A liquid medium according to any one of claims 1 to 4, **characterised in that** it contains nanoscale primary particles based on SiO₂, which have a zeta potential of about -100 to -200 mV.

6. A liquid medium according to at least any one of claims 1 to 5, **characterised in that** the nanoscale primary particles are present in the form of a mixed oxide of SiO₂ and other metal oxides, about 0.125 to 0.625 parts by weight, especially about 0.125 to 0.25 parts by weight, of the further metal oxide being apportioned to one part by weight SiO₂.

7. A method for producing an aqueous liquid medium with a content of nanoscale primary particles dispersed therein according to at least any one of the preceding claims, **characterised in that** an aqueous dispersion of an orthosilicate is stirred in the presence of a dispersing agent with a high-power stirrer and the orthosilicate is hydrolysed into nanoscale primary particles or a metal salt is mixed into the dispersion of the orthosilicate to form a mixed oxide of SiO₂ and other metal oxides and the dispersion obtained is stirred with a high-power stirrer and the orthosilicate contained therein is hydrolysed into nanoscale primary particles.

8. A method according to claim 7, **characterised in that** the concentration of the orthosilicate in the respective dispersion is adjusted to about 0.5 to 5 % by weight, especially to about 0.5 to 2 % by weight.

9. A use of the aqueous liquid medium with a content of nanoscale primary particles dispersed therein according to at least any one of claims 1 to 6 for the hydrophilising coating of hydrophobic textile materials.

10. A use according to claim 9, **characterised in that**, as textile materials, filaments, fibres, yarns, woven fabrics, knitted fabrics and/or nonwovens are provided with a hydrophilising coating.

11. A use according to claim 9 or claim 10, **characterised in that** the textile materials comprise of organic polymers or glass materials.

12. A use according to any one of claims 9 to 11 with the obtaining of textile materials with strongly pronounced hydrophilic properties, determined by the measuring method of the contact angle of a water drop and the liquid strike through time test.

13. A use according to claim 12, **characterised in that** the degree of hydrophilisation, measured on a polypropylene nonwoven, is expressed **in that** the contact angle of a water drop in comparison to the non-hydrophilised polypropylene nonwoven is reduced from 120 to 60° and in polypropylene woven fabrics from 117 to 48°.

14. A use according to claim 13, **characterised in that** the degree of hydrophilisation, measured on a polypropylene nonwoven, is expressed **in that** in a liquid strike through time test, the hydrophilised polypropylene nonwoven is wetted with the test liquid in less than 3 seconds.

15. A use according to at least any one of claims 9 to 14, **characterised in that** a hydrophobic outer layer with improved alcohol and oil repellency in comparison to a textile material without a hydrophilic intermediate layer is formed on the hydrophilic coating of the textile materials.

16. A use according to claim 15, **characterised in that** to form the hydrophobic outer layer, fluorinated compounds, especially fluorocarbon resins are used, especially in a significantly reduced application quantity compared to a textile material without a hydrophilic intermediate layer without the alcohol and oil repellency aimed for being impaired.

17. A use according to at least any one of claims 9 to 16, **characterised in that** an antimicrobial finish is implemented on the hydrophilic coating of the textile materials.

18. A use according to at least any one of claims 9 to 16 for improving the alcohol repellency, the oil repellency, the dyeing affinity, the wearing comfort and the antistatic properties and reducing the soiling tendency.

## Revendications

1. Milieu liquide aqueux présentant une teneur en particules primaires à l'échelle nanométrique dispersées dans celui-ci, à base de SiO₂ ou d'un mélange d'oxyde de SiO₂ et d'autres oxydes métalliques, en particulier de Al₂O₃, **caractérisé en ce que** les particules primaires à l'échelle nanométrique ont été produites dans le milieu liquide aqueux, présentent une taille moyenne de particules de 1 à 2000 nm (déterminée selon le procédé de mesure de la taille de particules avec l'appareil Zetasizer NS (Nano Série)) et une charge négative, mesurée en tant que potentiel zêta (déterminé selon le procédé de mesure en fonction du pH avec l'appareil Zetasizer) et sont hydrophilisantes pour des matériaux textiles hydrophobes.

2. Milieu liquide aqueux selon la revendication 1, **caractérisé en ce que** le milieu liquide aqueux est le milieu réactionnel dans lequel les particules primaires à l'échelle nanométriques ont été formées.

3. Milieu liquide selon la revendication 1 ou 2, **caractérisé en ce que** les particules primaires à l'échelle nanométrique présentent une taille de particules moyenne d'environ 40 à 500 nm.

4. Milieu liquide selon l'une des revendications 1 à 3, **caractérisé en ce qu'**il contient des particules primaires à l'échelle nanométrique à base d'un oxyde mixte de SiO₂ et d'autres oxydes métalliques et le potentiel zêta est d'environ -8 à -100 mV.

5. Milieu liquide selon l'une des revendications 1 à 4, **caractérisé en ce qu'**il contient des particules primaires à l'échelle nanométrique à base de SiO₂ qui présentent un potentiel zêta d'environ -100 à -200 mV.

6. Milieu liquide selon au moins l'une des revendications 1 à 5, **caractérisé en ce que** les particules primaires à l'échelle nanométrique se présentent sous la forme d'un oxyde mixte de SiO₂ et d'autres oxydes métalliques, sachant que sur 1 partie en poids de SiO₂, environ 0,125 à 0,625 partie en poids, en particulier environ 0,125 à 0,25 partie en poids de l'autre oxyde métallique manquent.

7. Procédé de production d'un milieu liquide aqueux présentant une teneur en particules primaires à l'échelle nanométrique dispersées dans celui-ci selon au moins l'une des revendications précédentes, **caractérisé en ce qu'**une dispersion aqueuse d'un orthosilicate est agitée en présence d'un agent dispersant avec un agitateur haute performance et l'orthosilicate est hydrolysé en particules primaires à l'échelle nanométrique ou on ajoute par mélange à la dispersion d'orthosilicate, un sel métallique pour former un oxyde mixte de SiO₂ et d'autres oxydes métalliques et la dispersion obtenue est agitée avec un agitateur haute performance et l'orthosilicate contenu dans celle-ci est hydrolysé en particules primaires à l'échelle nanométrique.

8. Procédé selon la revendication 7, **caractérisé en ce que** la concentration d'orthosilicate dans la dispersion respective est ajustée à environ 0,5 à 5 % en poids, en particulier à environ 0,5 à 2 % en poids.

9. Utilisation du milieu liquide aqueux présentant une teneur en particules primaires à l'échelle nanométrique dispersées dans celui-ci selon au moins l'une des revendications 1 à 6 pour l'apprêt hydrophilisant de matériaux textiles hydrophobes.

10. Utilisation selon la revendication 9, **caractérisée en ce que** des filaments, des fibres, des fils, des tissus, des tricots et/ou des non-tissés en tant que matériaux textiles, sont dotés d'un apprêt hydrophilisant.

11. Utilisation selon la revendication 9 ou 10, **caractérisée en ce que** les matériaux textiles sont constitués de polymères organiques ou de matériaux à base de verre.

12. Utilisation selon l'une des revendications 9 à 11, pour la régulation d'une propriété hydrophile fortement marquée d'un matériau textile, déterminée selon le procédé de mesure de l'angle de contact d'une goutte d'eau et du test Liquid Strike Through Time.

13. Utilisation selon la revendication 12, **caractérisée en ce que** le degré d'hydrophilisation, mesuré sur un non-tissé de polypropylène, est tel que l'angle de contact d'une goutte d'eau par rapport au non-tissé en polypropylène non hydrophilisé est réduit de 120 à 60° et par rapport au tissu de polypropylène, de 117 à 48°.

14. Utilisation selon la revendication 13, **caractérisée en ce que** le degré d'hydrophilisation, mesuré sur un non-tissé de polypropylène, est tel que dans un test Liquid Strike Through Time, le non-tissé de polypropylène hydrophilisé est mouillé en moins de 3 secondes avec le liquide de test.

15. Utilisation selon au moins l'une des revendications 9 à 14, **caractérisée en ce que**, sur l'apprêt hydrophile des matériaux textiles, est formée une couche externe hydrophobe à effet répulsif de l'alcool et de l'huile amélioré par rapport à un matériau textile sans couche hydrophile intermédiaire.

16. Utilisation selon la revendication 15, **caractérisée en ce que** pour constituer la couche externe hydrophobe, on utilise des composés fluorés, en particulier, des résines fluorocarbonées, en particulier en une quantité d'application nettement réduite par rapport à un matériau textile sans couche hydrophile intermédiaire, sans que cela nuise à l'effet répulsif de l'alcool ou de l'huile visé.

17. Utilisation selon au moins l'une des revendications 9 à 16, **caractérisée en ce qu'**il est prévu un équipement antimicrobien sur l'apprêt hydrophile des matériaux textiles.

18. Utilisation selon au moins l'une des revendications 9 à 16, destinée à améliorer la capacité de répulsion de l'alcool, de répulsion de l'huile, la capacité de coloration, le confort au porter et les propriétés antistatiques et à réduire la capacité de salissure.
